# EUROPEAN PATENT APPLICATION

(11) **EP 4 141 058 A1**
(43) Date of publication of application: **01.03.2023**
(21) Application number: 21194116.6
(22) Date of filing: 31.08.2021
(51) Int. Cl.: C08K 3/22, C08K 3/24, C08L 71/12, C08L 81/04

(54) **HIGH DIELECTRIC THERMOPLASTIC COMPOSITION WITH CERAMIC TITANATE AND THE SHAPED ARTICLE THEREOF**

(71) Applicant: SHPP Global Technologies B.V., 4612 PX Bergen op Zoom (NL)
(72) Inventor: DU, Yinlong, Shanghai (CN); SONG, Shijie, Shanghai (CN); FANG, Yapeng, Shanghai (CN)
(74) Representative: Dehns

(57) **Abstract**

Disclosed is a composition comprising from about 15 wt. % to about 80 wt. % of a thermoplastic resin, wherein the thermoplastic resin comprises a polyphenylene sulfide, a polyether ketone, a polyphenylene oxide or a combination thereof; and from about 10 wt. % to 80 wt. % of a ceramic filler, wherein the ceramic filler comprises TiO₂, BaTiO₃, BaTi₄O₉, BaTi₉O₂₀, CaTiO₃, MgTiO₃, , magnesium calcium titanate (MgₓCa₁₋ₓTiO₃), copper calcium titanate (CaCu₃Ti₄O₁₂), or SrTiO₃ or a combination thereof, wherein the ceramic filler has a particle size of from about 0.1 µm to about 10 µm, wherein the composition exhibits a dielectric constant greater than 4, wherein the composition exhibits a dissipation factor less than 0.005 at 1.9 GHz, and wherein the combined weight percent value of all components does not exceed 100 wt. %, and all weight percent values are based on the total weight of the composition.

## Description

### FIELD OF THE DISCLOSURE

The present disclosure relates to compositions having a high dielectric constant, and in particular to ceramic titanate-filled polyether ketone (PEEK), polyphenylene oxide (PPO), or polyphenylene sulfide (PPS) compositions having a high dielectric constant.

### BACKGROUND OF THE DISCLOSURE

Recently, the replacement of ceramic materials with filled thermoplastics has been prominent in a number of technological applications because the thermoplastics generally benefit from light weight, flexible processing, better toughness and lower cost when compared to pure ceramic materials. However, traditional thermoplastic approaches such as ceramic filled polyphenylene oxide PPO and polypropylene PP materials exhibit a lower heat resistance, melt flow, dimensional stability, and chemical resistance, as well as a lower maximum dielectric constant (specifically, about 9.0). The limitations in Dk ultimately limit the utilization of these materials in certain high Dk applications. Thus, there remains a need in the art for filled thermoplastic materials that exhibit desirable high Dk while also maintaining traditional thermoplastic mechanical and physical properties.

Aspects of the present disclosure addresses these and other needs.

### SUMMARY

Aspects of the disclosure relate to a composition comprising: from about 15 wt. % to about 80 wt. % of a thermoplastic resin, wherein the thermoplastic resin comprises a polyphenylene sulfide, a polyether ketone, a polyphenylene oxide or a combination thereof; and from about 10 wt. % to 80 wt. % of a ceramic filler, wherein the ceramic filler comprises TiO₂, BaTiO₃, BaTi₄O₉, BaTi₉O₂₀, CaTiO₃, MgTiO₃, magnesium calcium titanate (MgₓCa₁₋ₓTiO₃) and copper calcium titanate (CaCu₃Ti₄O₁₂), or SrTiO₃ or a combination thereof, wherein the ceramic filler has a particle size of from about 0.1 µm to about 10 µm, wherein the composition exhibits a dielectric constant greater than 4, wherein the composition exhibits a dissipation factor less than 0.005 at 1.9 GHz, and wherein the combined weight percent value of all components does not exceed 100 wt. %, and all weight percent values are based on the total weight of the composition.

### BRIEF DESCRIPTION OF THE FIGURES

The accompanying figures, which are incorporated in and constitute a part of this specification, illustrate several aspects and together with the description serve to explain the principles of the disclosure.
FIG. 1 presents Table 4 including the formulations and properties of PEEK/TiO₂ composition.
FIG. 2 presents Table 5 including the formulations and properties of PEEK and a series of ceramic titanates.
FIG. 3 presents Table 6 including the formulations and properties of composition of PPS and a series of ceramic titanates.
FIG. 4 presents Table 7 including formulations and properties of PPS/CaTiO₃ compositions.
FIG. 5 presents Table 8 including formulations and properties of high Dk PEEK/CaTiO₃ compositions.
FIG. 6 presents Table 9 including formulations and properties of high Dk PPS/GF/ceramic compositions.
FIG. 7 presents Table 10 including formulations and properties of high Dk PPO/ceramic composition

### DETAILED DESCRIPTION

The replacement of ceramic materials with thermoplastics has drawn much attention in a number of industrial applications. A primary area has been in the materials for wireless telecommunication devices, because of the benefit of light weight, flexible processing, better toughness and lower cost of thermoplastic materials compared to purely ceramic materials. Traditional thermoplastic approaches such as ceramic filled polyphenylene oxide and polypropylene materials, have lower heat resistance, melt flow, dimensional stability, and chemical resistance. Most importantly, these materials have a lower upper limit for the dielectric constant Dk (about 9), thereby limiting the use of these materials in applications requiring a sufficiently high Dk

In this work, high performance thermoplastic polyphenylene sulfide (PPS) and polyether ether ketone (PEEK) were selected as base resin owing to their semi-crystalline nature, which offers well-balanced characteristics including good flowability, dimensional stability, high temperature resistance, and low dielectric loss.

In general, to achieve high dielectric constant (Dk) value for applications in electronic devices and ceramic replacement, high Dk ceramic fillers such as titanate dioxide (TiO₂) and Barium titanate (BaTiO₃, BaTi₄O₉, BaTi₉O₂₀) are among the most commonly used ceramic candidates in thermoplastic composition over the past few decades. Recently, several new types of ceramic titanate with a typical stoichiometry of ABO₃ appeared as next generation high Dk materials, including magnesium titanate (MgTiO₃), calcium titanate

(CaTiO₃), and Strontium titanate (SrTiO₃) due to their higher Dk value. As semi-crystalline polymer with excellent heat resistance, low moisture absorption, inherently low dissipation factor (Df), and good flowability. PPS and PEEK are capable of incorporating high concentration of ceramic filler above 70%, thus could be considered as good candidates for high Dk materials base resin. Development of ceramic titanates filled PPS or PEEK compounds with high Dk/low Df have been lacking and are not readily available in the market. Further, although PPO has been suggested as a high dielectric constant compositions for injection molding, conventional ceramic fillers used to increase Dk are limited to titanate dioxide (TiO₂) and Barium titanate (BaTiO₃, BaTi₄O₉, BaTi₉O₂₀) as disclosed in US Patent Publication 20180258282A1 and US Patent Publication 20210009886A1. These ceramic filled materials however had a limited dielectric constant maximum.

Compositions of the present disclosure feature a few novel high Dk ceramic titanates fillers, such as CaTiO₃, MgTiO₃, MgₓCa₁₋ₓTiO₃ (where 0 < x < 1), SrTiO₃ and CaCu₃Ti₄O₁₂ with a particle size from 0.1 µm to 10 µm to achieve higher Dk and/or lower Df values. The disclosed compositions surpass the dielectric constant value ceiling of traditional ceramic filled materials and may successfully achieve Dk values from 4.0 to 20.0. Meanwhile, the composition of ceramic filled PPS and PEEK exhibit superior mechanical properties and dimensional stability to most of the high Dk thermoplastic products. The present disclosure provides novel compositions using high heat thermoplastic polyphenylene sulfide (PPS) or polyether ether ketone (PEEK) or polyphenylene oxide (PPO) as a base resin having a high dielectric constant (Dk) and low dissipation factor (Df), high heat resistance, easy processing, good dimensional stability and mechanical properties.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of embodiments described in the specification.

### Composition

Aspects of the disclosure relate to a composition comprising a thermoplastic polymer component and a ceramic titanate. The thermoplastic polymer component may include polyphenylene sulfide, a polyether ketone, or a combination thereof. The present disclosure combines high performance thermoplastic polyphenylene sulfide (PPS), polyether ether ketone (PEEK), and/or polyphenylene oxide (PPO) with a ceramic filler. These semi-crystalline resins may offer well-balanced characteristics including good flowability, dimensional stability, high temperature resistance, and low dielectric loss. The disclosed compositions achieve a high Dk compared to traditional ceramic filled materials, namely a Dk value greater than 4 (particularly from 4.0 to 20.0). Moreover, the disclosed compositions of ceramic filled PPS, PPO, and PEEK exhibit superior mechanical properties and dimensional stability. In further aspects, the composition exhibits a dissipation factor less than 0.005 at 1.9 GHz when tested using a split post dielectric resonator (SPDR) and network analyzer.

Compositions of the present disclosure may comprise ceramic filled PPS, PPO, or PEEK thermoplastic resins. The compositions may vary according to the identity of the thermoplastic resin among PPS, PPO, or PEEK. That is, the compositions may feature varying ceramic fillers and accompanying additives or fillers according to the thermoplastic resin as PPS, PPO, or PEEK. In certain aspects, the composition may comprise 10 wt.% - 70 wt.% of poly(p-phenylene oxide) PPO resin, 5 wt.% to 20 wt.% of general purpose polystyrene GPPS, 0 wt.% to 30 wt.% of an impact modifier, 5 wt.% to 75 wt.% of a ceramic fillers having a dielectric constant greater than or equal to 10 at 1 GHz, and 0 wt.% to 50 wt.% of glass fibers. In further aspects, the composition may comprise 20 wt.% to 80 wt.% of polyether ether ketone (PEEK) resin, 5 wt.% to 80 wt.% by weight of ceramic fillers having a dielectric constant greater than or equal to 10 at 1 GHz, and 0 wt.% to 50 wt.% of glass fibers. In yet further aspects, the composition may comprise 20 wt.% to 80 wt.% of polyphenylene sulfide (PPS) resin, including linear, branched, cross-linked PPS and any mixture, 5 wt.% to 80 wt.% of ceramic fillers having a dielectric constant greater than or equal to 10 at 1 GHz, 0 wt.% to 50 wt.% of glass fibers, and 0 wt.% to 5 wt.% of an impact modifier.

The disclosure provides compositions comprising high heat thermoplastic polyphenylene sulfide (PPS) or polyether ether ketone (PEEK) as base resin with ceramic filler. These compositions may exhibit a high dielectric constant and low dissipation factor (Df), high heat resistance, easy processing, good dimensional stability and mechanical properties.

### Thermoplastic Resin

In various aspects, the composition may comprise a thermoplastic resin. Semicrystalline thermoplastic resin may be useful. The thermoplastic resin may comprise polyphenylene sulfide (PPS), including linear, branched, cross-linked PPS and the mixture, or polyether ether ketone (PEEK), as well as a mixture of PEEK and PPS.

Other suitable high heat polymer resins include polysulfones, polyether sulfones, polyphenylene oxide, polyarylates, polycarbonates (T_{g} about 145 °C) and crystalline resins (Tₘ greater than about 200 °C) such as polyamides, polyesters, polyaryl ether ketones, such as PAEK and PEEK, as well as blends of high heat crystalline and amorphous resins.

In an aspect, the polymer composition may comprise at least a polyarylene sulfide resin. In yet further examples, the thermoplastic resin may comprise polyphenylene sulfide (PPS). The thermoplastic resin may further comprise one or more polymers in addition to the polyarylene sulfide resin, including but not limited to polypropylene, polyethylene, ethylene based copolymer, polyamide, polycarbonate, polyester, polyoxymethylene (POM), polybutylene terephthalate (PBT), polyethylene terephthalate (PET), polycyclohexylendimethylene terephthalate (PCT), liquid crystal polymers (LCP), polyphenylene ether (PPE), polyphenylene oxide-polystyrene blends, polystyrene, high impact modified polystyrene, acrylonitrile-butadiene-styrene (ABS) terpolymer, acrylic polymer, polyetherimide (PEI), polyurethane, polyetheretherketone (PEEK), polylactic acid (PLA) based polymers, poly ether sulphone (PES), and combinations thereof.

The term polyarylene sulfide resin may include polyphenylene sulfide (PPS), polyarylene sulfide ionomers, polyarylene sulfide copolymers, polyarylene sulfide graft copolymers, block copolymers of polyarylene sulfides with alkenyl aromatic compounds or with vinyl aromatic compounds, and combinations comprising at least one of the foregoing polyarylene sulfides. Polyarylene sulfides are known polymers comprising a plurality of structural units of the formula -R-S- wherein R is an aromatic radical such as phenylene, biphenylene, naphthylene, oxydiphenyl, or diphenyl sulfone. Known methods of preparing polyarylene sulfides include those described in U.S. Pat. No. 4,490,522 to Kawabata et al and U.S. Pat. No. 4,837,301 to Glock et al.

In one aspect, the polyarylene sulfide comprises a plurality of structural units of the formula: 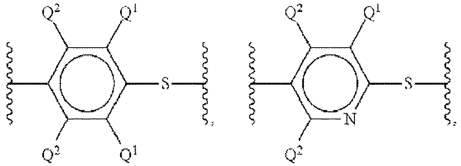 or 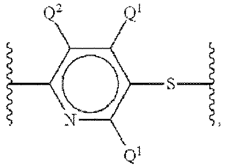 wherein for each structural unit, each Q1 and each Q2 is independently hydrogen, halogen, primary or secondary lower alkyl, phenyl, haloalkyl, aminoalkyl, hydrocarbonoxy, or halohydrocarbonoxy wherein at least two carbon atoms separate the halogen and oxygen atoms. In a further aspect, each Q1 is hydrogen, alkyl, or phenyl. In a further aspect, at least one Q1 is C1-4 alkyl. In a further aspect, each Q2 is hydrogen.

In a further aspect, the polyarylene sulfide comprises a plurality of structural units of the formula: 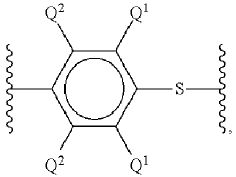 wherein for each structural unit, each Q1 and each Q2 is independently hydrogen, halogen, primary or secondary lower alkyl, phenyl, haloalkyl, aminoalkyl, hydrocarbonoxy, or halohydrocarbonoxy wherein at least two carbon atoms separate the halogen and oxygen atoms. In a further aspect, each Q1 is hydrogen, alkyl, or phenyl. In a further aspect, at least one Q1 is C1-4 alkyl. In a further aspect, each Q2 is hydrogen.

PPS is typically prepared by the reaction of p-dichlorobenzene with sodium sulfide, optionally with the use of a minor proportion of 1,3,5-trichlorobenzene as a branching agent. Reference is made, for example, to U.S. Pat. No. 4,794,163, for a disclosure of typical reagents and conditions employed in polyarylene sulfide preparation. It is often impracticable to determine the molecular weight of a polyarylene sulfide, by reason of its insolubility in essentially all solvents used for molecular weight determination. Indirect characterization of relative molecular weight by melt flow characteristics is commonly employed. The melt flow characteristics of the polyarylene sulfides used according to this invention are not critical; values in the range of 20-1000 g/10 minute (determined at 315°C under a 5 kg load) are typical.

In various aspects, the polyarylene sulfide is polyphenylene sulfide with a melting temperature of about 270 °C to about 290 °C when determined in accordance with ISO 11357 at 10 °C /min and a glass transition temperature of about 80 °C to about 100 °C when determined in accordance with ISO 11357 at 10 °C/min. In a still further aspect, the polyarylene sulfide is polyphenylene sulfide with a melting temperature of about 280 °C. when determined in accordance with ISO 11357 at 10 °C/min and a glass transition temperature of about 90° C. when determined in accordance with ISO 11357 at 10 °C/min.

In various further aspects, the polyarylene sulfide is polyphenylene sulfide with a melting temperature of about 270 °C to about 290 °C when determined in accordance with ISO 11357 at 10 °C /min; a glass transition temperature of about 80 °C to about 100 °C when determined in accordance with ISO 11357 at 10 °C/min; a deflection temperature under load (DTUL) of about 110 °C to about 120 °C under a load of 1.8 MPa when determined in accordance with ISO 75; and a deflection temperature under load (DTUL) of about 90 °C to about 100 °C under a load of 8.0 MPa when determined in accordance with ISO 75. In a still further aspect, the polyarylene sulfide is polyphenylene sulfide with a melting temperature of about 280 °C when determined in accordance with ISO 11357 at 10 °C/min; a glass transition temperature of about 90 °C when determined in accordance with ISO 11357 at 10 °C /min; a deflection temperature under load (DTUL) of about 115° C. under a load of 1.8 MPa when determined in accordance with ISO 75; and a deflection temperature under load (DTUL) of about 95 °C under a load of 8.0 MPa when determined in accordance with ISO 75. In various aspects, the polyphenylene sulfide may comprise a linear, branched, or cross-linked PPS. In specific examples, the polyphenylene sulfide may exhibit a melt flow index (315 °C/5kg) ranging from 100 cm³/10 min to 900 cm³/10 min when measured in accordance with ASTM D1238.

Poly(arylene ether ketone)s are generally known, with many examples being commercially available. Examples of commercially available aromatic polyketones include those sold under the trade name PEEK^{™}, available from VICTREX.

In an aspect, the poly(arylene ether ketone) comprises a poly(ether ether ketone), a poly(ether ketone), a poly(ether ketone ketone), or a combination thereof, such as, for example, a poly(ether ether ketone).

The composition comprises a poly(phenylene ether). Poly(phenylene ether)s include those comprising repeating structural units of formula shown below 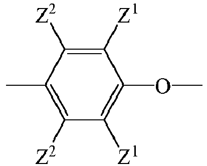 wherein each occurrence of Z¹ is independently halogen, unsubstituted or substituted C₁₋₁₂ hydrocarbyl provided that the hydrocarbyl group is not tertiary hydrocarbyl, C₁₋₁₂ hydrocarbylthio, C₁₋₁₂ hydrocarbyloxy, or C₂₋₁₂ halohydrocarbyloxy wherein at least two carbon atoms separate the halogen and oxygen atoms; and each occurrence of Z² is independently hydrogen, halogen, unsubstituted or substituted C₁₋₁₂ hydrocarbyl provided that the hydrocarbyl group is not tertiary hydrocarbyl, C₁₋₁₂ hydrocarbylthio, C₁₋₁₂ hydrocarbyloxy, or C₂₋₁₂ halohydrocarbyloxy wherein at least two carbon atoms separate the halogen and oxygen atoms. As used herein, the term "hydrocarbyl," whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. As one example, Z¹ can be a di-n-butylaminomethyl group formed by reaction of a terminal 3,5-dimethyl-1,4-phenyl group with the di-n-butylamine component of an oxidative polymerization catalyst.

In various aspects, the disclosed composition may comprise a polyphenylene ether such as polyphenylene oxide (a "poly(p-phenylene oxide") PPO. PPO may describe polymers containing optionally substituted phenyl rings linked with oxygen (O) and can be used interchangeably with poly(p-phenylene ether) or poly (2,6 dimethyl-p-phenylene oxide). Further, the disclosed composition may comprise a specific combination of PPO resins. The polyphenylene oxide may be present as a polyphenylene oxide resin. In further aspects, the polyphenylene oxide may be present as a polyphenylene oxide copolymer. The PPO resin may have a weight average molecular weight (Mw) from about 20,000 to 80,000 Daltons.

Certain aspects of the composition include from about 50 wt. % to about 97 wt. % of a thermoplastic resin, or from about 40 wt. % to about 97 wt. % of a thermoplastic resin, or from about 55 wt. % to about 97 wt. % of a thermoplastic resin, or from about 60 wt. % to about 97 wt. % of a thermoplastic resin, or from about 70 wt. % to about 97 wt. % of a thermoplastic resin, or from about 40 wt. % to about 95 wt. % of a thermoplastic resin, or from about 55 wt. % to about 95 wt. % of a thermoplastic resin, or from about 60 wt. % to about 95 wt. % of a thermoplastic resin, or from about 75 wt. % to about 97 wt. % of a thermoplastic resin. In various aspects, the composition comprises a blend of thermoplastic resins, such as a blend of suitable polyester resins.

### Ceramic Filler

The polymer composition of the present disclosure may comprise a ceramic filler. Suitable ceramic fillers may include ceramic titanates and organic piezoelectric materials. Examples may include piezoelectric lead zirconate titanate (PZT) and barium titanate (BT) ceramics. The piezoelectric constant d₃₃ of PZT and BT are very high (about 100 to 600 pC/N). These ceramic fillers may also have a high dielectric constant (about 500 to 5000). In aspects of the present disclosure, the piezoelectric filler may have a minimum d₃₃ of 100 pC/N.

Typical examples of the ceramic fillers that are useful in the present disclosure may include, but are not limited to, lead zirconate titanate (PZT), lead niobium titanate (PNT), and lead scandium niobium titanate (PSNT). Piezoelectric fillers may further include but are not limited to, lead zirconate titanate (PZT), lead niobium titanate (PNT), and lead scandium niobium titanate (PSNT), lead metaniobate, barium titanate, lead titanate, bismuth scandate BiScO₃, KNN-Li (KNN = K_{0.5}Na_{0.5}NbO₃), bismuth sodium niobate (BNT), KNLN, and (K_{0.5}Na_{0.5})₁-ₓLiₓNbO₃ potassium sodium niobate (KNaNb)O₃ (KNN), potassium lithium sodium niobate (KLi)(NaNb)O₃ (KLNN), hydroxyapatite, apatite, lithium sulfate monohydrate, sodium bismuth titanate, quartz, an organic material (preferably, tartaric acid or vinylidene fluoride polymer fibers), or combinations thereof. In one particular example, not intended to limit the disclosure, the percent is about 10 wt% to about 80 wt.% of TiO₂, BaTiO₃, BaTi₄O₉, BaTi₉O₂₀, CaTiO₃, MgTiO₃, magnesium calcium titanate (MgₓCa₁₋ₓTiO₃, where 0 < x < 1, for example x is 0.15), copper calcium titanate (CaCu₃Ti₄O₁₂), or SrTiO₃ or a combination thereof based on the total weight of the monomer or precursor polymer.

In various aspects, the ceramic filler is a particulate dispersed throughout the polymer resin matrix. The size of the ceramic filler may vary. For example, the ceramic filler may have a size of a few micrometer or the ceramic filler may be nanoparticles or nanomolecular size. For example, the ceramic filler may have a mean particle size (D₅₀) of from about 0.1 micrometers (µm) to about 10 µm. With respect to particle size distribution, D represents the diameter of particles, D₅₀ is a cumulative 50% point of diameter (or 50% pass particle or the value of the particle diameter at 50 % in the cumulative distribution); D₁₀ means a cumulative 10% point of diameter; and D₉₀ is a cumulative 90% point of diameter; D₅₀ is also called average particle size or median diameter. In a specific example, the ceramic filler has a particle size or an average particle size of from about 3 µm.

The ceramic filler may be present in an amount of from about 10 wt. % to about 80 wt. %, or from about 20 to about 80 wt. %, or from about 25 to about 80 wt. %, or from about 30 wt. % to about 80%, or from about 12 wt. % to about 80 wt. %, or from about 15 wt. % to about 81 wt. %, or from about 15 wt. % to about 80 wt. % based on the total weight of the composition.

According to aspects of the present disclosure, certain combination of ceramic filler and thermoplastic resin may be appropriate. In specific examples where the thermoplastic resin comprises a polyether ketone, a suitable ceramic filler may comprise TiO₂, BaTiO₃, BaTi₄O₉, BaTi₉O₂₀, CaTiO₃, MgTiO₃, magnesium calcium titanate (MgₓCa₁₋ₓTiO₃), copper calcium titanate (CaCu₃Ti₄O₁₂), or SrTiO₃ or a combination thereof. In one example, for magnesium calcium titanate MgₓCa₁₋ₓTiO₃, x may be 0.15. More specifically, where the thermoplastic resin comprises a polyether ketone, the disclosed composition may comprise from 20 wt% to 80 wt% of polyether ether ketone (PEEK) resin, from 5 wt% to 80 wt% of ceramic fillers having a dielectric constant greater than or equal to 10 at 1 GHz, and from 0 wt% to 50 wt% of glass fibers based on the total weight of the composition.

In examples where the thermoplastic resin comprises a polyphenylene sulfide, the ceramic filler may comprise a calcium titanate, magnesium titanate, magnesium calcium titanate, copper calcium titanate or a combination thereof. For example, where the thermoplastic resin comprises a polyphenylene sulfide resin, the composition may comprise 20 wt% to 80 wt% of polyphenylene sulfide (PPS) resin, and 5 wt% to 80 wt% of ceramic fillers having a dielectric constant greater than or equal to 10 at 1 GHz, 0 wt% to 50 wt% of glass fibers, and 0 wt% to 5 wt% of an impact modifier.

In further examples where the thermoplastic resin comprises a polyphenylene ether, the ceramic filler may comprise calcium titanate, strontium titanate, magnesium titanate, magnesium calcium titanate, copper calcium titanate or a combination thereof. As a specific example, where the thermoplastic resin comprises a polyphenylene ether, the composition may comprise from 10 wt% - 70 wt% of poly(p-phenylene oxide) PPO resin, from 5 wt% to 20 wt% of a general purpose polystyrene GPPS, from 0.01 wt% to 30 wt% of an impact modifier, from 5 wt% to 75 wt% of a ceramic fillers having a dielectric constant greater than or equal to 10 at 1 GHz, and 0 wt% to 50 wt% of glass fiber.

### Impact Modifier

As an example, the disclosed composition may comprise an impact modifier. The impact modifiers may comprise high molecular weight elastomeric materials derived from olefins, monovinyl aromatic monomers, acrylic and methacrylic acids and their ester derivatives, as well as conjugated dienes that are fully or partially hydrogenated. The elastomeric materials can be in the form of homopolymers or copolymers, including random, block, radial block, graft, and core-shell copolymers.

In an aspect, suitable impact modifiers can include an epoxy-functional block copolymer. The epoxy-functional block copolymer can include units derived from a C₂₋₂₀ olefin and units derived from a glycidyl (meth)acrylate. Exemplary olefins include ethylene, propylene, butylene, and the like. The olefin units can be present in the copolymer in the form of blocks, e.g., as polyethylene, polypropylene, polybutylene, and the like blocks. It is also possible to use mixtures of olefins, i.e., blocks containing a mixture of ethylene and propylene units, or blocks of polyethylene together with blocks of polypropylene.

In addition to glycidyl (meth)acrylate units, the epoxy-functional block copolymers can further include additional units, for example C₁₋₄ alkyl (meth)acrylate units. In one aspect, the impact modifier is terpolymeric, comprising polyethylene blocks, methyl acrylate blocks, and glycidyl methacrylate blocks. Specific impact modifiers are a co- or terpolymer including units of ethylene, glycidyl methacrylate (GMA), and methyl acrylate. Suitable impact modifiers include the ethylene-methyl acrylate-glycidyl methacrylate terpolymer comprising 8 wt. % or about 8 wt. % glycidyl methacrylate units available under the trade name LOTADER^{™} AX8900 from Arkema. Another epoxy-functional block copolymer that can be used in the composition includes ethylene acrylate, for example an ethylene-ethylacrylate copolymer having an ethylacrylate content of less than 20%, available from Rohm and Haas (Dow Chemical) under the trade name Paraloid^{™} EXL-3330. It will be recognized that combinations of impact modifiers may be used. In some aspects, the impact modifier may be present in an amount from greater than 0 wt. % to 10 wt. % or from greater than 0 wt. % to about 10 wt. %. In further aspects, the impact modifier is present in an amount from 0.01 wt. % to 8 wt. % or from about 0.01 wt. % to about 8 wt. %, or from 0.01 wt. % to 7 wt. % or from about 0.01 wt. % to about 7 wt. %, or from 0.01 wt. % to 6 wt. % or from about 0.01 wt. % to about 6 wt. %, or from 2 wt. % to 8 wt. % or from about 2 wt. % to about 8 wt. %, or from 3 wt. % to 7 wt. % or from about 3 wt. % to about 7 wt.%.

A specific type of impact modifier may be an elastomer-modified graft copolymer comprising (i) an elastomeric (i.e., rubbery) polymer substrate having a Tg less than about 10 °C, less than about 0 °C, less than about -10 °C, or between about -40 °C to -80 °C, and (ii) a rigid polymer grafted to the elastomeric polymer substrate. Materials suitable for use as the elastomeric phase include, for example, conjugated diene rubbers, for example polybutadiene and polyisoprene; copolymers of a conjugated diene with less than about 50 wt % of a copolymerizable monomer, for example a monovinylic compound such as styrene, acrylonitrile, n-butyl acrylate, or ethyl acrylate; olefin rubbers such as ethylene propylene copolymers (EPR) or ethylene-propylene-diene monomer rubbers (EPDM); ethylene-vinyl acetate rubbers; silicone rubbers; elastomeric C₁-C₈ alkyl(meth)acrylates; elastomeric copolymers of C₁-C₈ alkyl(meth)acrylates with butadiene and/or styrene; or combinations comprising at least one of the foregoing elastomers. Materials suitable for use as the rigid phase include, for example, monovinyl aromatic monomers such as styrene and alpha-methyl styrene, and monovinylic monomers such as acrylonitrile, acrylic acid, methacrylic acid, and the C₁-C₆ esters of acrylic acid and methacrylic acid, specifically methyl methacrylate.

Specific impact modifiers include styrene-butadiene-styrene (SBS), styrene-butadiene rubber (SBR), styrene-ethylene-butadiene-styrene (SEBS), styrene ethylene propylene styrene (SEPS), ABS (acrylonitrile-butadiene-styrene), acrylonitrile-ethylene-propylene-diene-styrene (AES), styrene-isoprene-styrene (SIS), methyl methacrylate-butadiene-styrene (MBS), and styrene-acrylonitrile (SAN). A suitable SEBS impact modifier is high flow SEBS with a melt flow index that is greater than 3 g / 10 min at 230°C / 5 kg. In a specific example, the composition comprises a SEBS impact modifier comprising 40 percent by weight polystyrene. Impact modifiers may be included in the present composition in the amount of 0.5 wt. % to 15 wt. % based on the total weight of the composition. For example, the impact modifier may be present in the amount of 0.5 wt. % to 12 wt. %, 0.5 wt. % to 10 wt. %, 0.5 wt. % to 8 wt.%, 1 wt. % to 15 wt. %, 2 wt. % to 15 wt. %, 2 wt. % to 10 wt. %, 2 wt. % to 8 wt. %.

### Additives

The disclosed thermoplastic composition can comprise one or more additives conventionally used in the manufacture of molded thermoplastic parts with the proviso that the optional additives do not adversely affect the desired properties of the resulting composition. Mixtures of optional additives can also be used. Such additives can be mixed at a suitable time during the mixing of the components for forming the composition mixture. Exemplary additives can include ultraviolet agents, ultraviolet stabilizers, heat stabilizers, antistatic agents, anti-microbial agents, anti-drip agents, radiation stabilizers, pigments, dyes, fibers, fillers, plasticizers, fibers, flame retardants, antioxidants, lubricants, wood, glass, and metals, and combinations thereof. According to certain aspects, the polymer compositions may maintain mechanical and dielectric performance even with high levels of fillers (for example, greater than 30 wt. % filler based on the total weight of the polymer composition).

The composition disclosed herein can comprise one or more additional fillers. The filler can be selected to impart additional impact strength and/or provide additional characteristics that can be based on the final selected characteristics of the polymer composition. In some aspects, the filler(s) can comprise inorganic materials which can include clay, titanium oxide, asbestos fibers, silicates and silica powders, boron powders, calcium carbonates, talc, kaolin, sulfides, barium compounds, metals and metal oxides, wollastonite, glass spheres, glass fibers, flaked fillers, fibrous fillers, natural fillers and reinforcements, and reinforcing organic fibrous fillers. In certain aspects, the composition may comprise a glass fiber filler. For example, the composition may comprise from about 0.01 wt. % to about 25 wt. %, from about 10 wt. % to about 25 wt. %, from about 15 wt. % to about 25 wt. %, of a glass fiber filler based on the total weight of the composition. In yet further aspects, the composition may be free or substantially free of a glass filler.

In a further aspect, the glass fiber can be continuous or chopped. In a still further aspect, the glass fiber is continuous. In a further aspect, the glass fiber included in the glass fiber component is selected from E-glass, S-glass, AR-glass, T-glass, D-glass and R-glass. In yet a further aspect, the glass fiber is chopped. As a specific example, the glass fiber may be an E-glass. Glass fibers in the form of chopped strands may have a length of 0.3 millimeter (mm) to 10 centimeters (cm) or about 0.3 mm to about 10 cm.

In various further aspects, the glass fiber has a round (or circular), flat, or irregular cross-section. Thus, use of non-round fiber cross sections is possible. In a still further aspect, the glass fiber has a circular cross-section. In yet further aspect, the diameter of the glass fiber is from 1 micrometer (micron, µm) to 15 µm, or from about 1 µm to about 15 µm. In an even further aspect, the diameter of the glass fiber is from 4 µm to 10 µm or from about 4 µm to about 10 µm. In a still further aspect, the diameter of the glass fiber is from 1 µm to 10 µm or from about 1 to about 10 µm. In a still further aspect, the glass fiber has a diameter from 7 µm to 10 µm or from about 7 µm to about 10 µm.

As provided above, glass fiber having a flat cross-section may be used. A flat glass fiber may have an aspect ratio for the flat cross-section of 2 to 5 or from about 2 to about 5. For example, the flat cross-section glass may have a flat ratio of 4:1.

Further appropriate fillers or reinforcing agents can include, for example, mica, clay, feldspar, quartz, quartzite, perlite, tripoli, diatomaceous earth, aluminum silicate (mullite), synthetic calcium silicate, fused silica, fumed silica, sand, boron-nitride powder, boron-silicate powder, calcium sulfate, calcium carbonates (such as chalk, limestone, marble, and synthetic precipitated calcium carbonates) talc (including fibrous, modular, needle shaped, and lamellar talc), wollastonite, hollow or solid glass spheres, silicate spheres, cenospheres, aluminosilicate or (armospheres), kaolin, whiskers of silicon carbide, alumina, boron carbide, iron, nickel, or copper, continuous and chopped carbon fibers, molybdenum sulfide, zinc sulfide, barium titanate, barium ferrite, barium sulfate, heavy spar, titanium dioxide, aluminum oxide, magnesium oxide, particulate or fibrous aluminum, bronze, zinc, copper, or nickel, glass flakes, flaked silicon carbide, flaked aluminum diboride, flaked aluminum, steel flakes, natural fillers such as wood flour, fibrous cellulose, cotton, sisal, jute, starch , lignin, ground nut shells, or rice grain husks, reinforcing organic fibrous fillers such as poly(ether ketone), polyimide, polybenzoxazole, poly(phenylene sulfide), polyesters, polyethylene, aromatic polyamides, aromatic polyimides, polyetherimides, polytetrafluoroethylene, and poly(vinyl alcohol), as well combinations comprising at least one of the foregoing fillers or reinforcing agents. The fillers and reinforcing agents may be coated or surface treated, with silanes for example, to improve adhesion and dispersion with the polymer matrix. Fillers generally can be used in amounts of 1 to 200 parts by weight, based on 100 parts by weight of based on 100 parts by weight of the total composition.

In some aspects, the thermoplastic composition may comprise a synergist. In various examples fillers may serve as flame retardant synergists. The synergist facilitates an improvement in the flame retardant properties when added to the flame retardant composition over a comparative composition that contains all of the same ingredients in the same quantities except for the synergist. Examples of mineral fillers that may serve as synergists are mica, talc, calcium carbonate, dolomite, wollastonite, barium sulfate, silica, kaolin, feldspar, barytes, or the like, or a combination comprising at least one of the foregoing mineral fillers. Metal synergists, e.g., antimony oxide, can also be used with the flame retardant. In one example, the synergist may comprise magnesium hydroxide and phosphoric acid. The mineral filler may have an average particle size of about 0.1 to about 20 micrometers, specifically about 0.5 to about 10 micrometers, and more specifically about 1 to about 3 micrometers.

The thermoplastic composition can comprise an antioxidant. The antioxidants can include either a primary or a secondary antioxidant. For example, antioxidants can include organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like, or combinations including at least one of the foregoing antioxidants. Antioxidants can generally be used in amounts of from 0.01 to 0.5 parts by weight, based on 100 parts by weight of the total composition, excluding any filler.

In various aspects, the thermoplastic composition can comprise a mold release agent. Exemplary mold releasing agents can include for example, metal stearate, stearyl stearate, pentaerythritol tetrastearate, beeswax, montan wax, paraffin wax, or the like, or combinations including at least one of the foregoing mold release agents. Mold releasing agents are generally used in amounts of from about 0.1 to about 1.0 parts by weight, based on 100 parts by weight of the total composition, excluding any filler.

In an aspect, the thermoplastic composition can comprise a heat stabilizer. As an example, heat stabilizers can include, for example, organo phosphites such as triphenyl phosphite, tris-(2,6-dimethylphenyl)phosphite, tris-(mixed mono-and dinonylphenyl)phosphite or the like; phosphonates such as dimethylbenzene phosphonate or the like, phosphates such as trimethyl phosphate, or the like, or combinations including at least one of the foregoing heat stabilizers. Heat stabilizers can generally be used in amounts of from 0.01 to 0.5 parts by weight based on 100 parts by weight of the total composition, excluding any filler.

In further aspects, light stabilizers can be present in the thermoplastic composition. Exemplary light stabilizers can include, for example, benzotriazoles such as 2-(2-hydroxy-5-methylphenyl)benzotriazole, 2-(2-hydroxy-5-tert-octylphenyl)-benzotriazole and 2-hydroxy-4-n-octoxy benzophenone or the like or combinations including at least one of the foregoing light stabilizers. Light stabilizers can generally be used in amounts of from about 0.1 to about 1.0 parts by weight, based on 100 parts by weight of the total composition, excluding any filler. The thermoplastic composition can also comprise plasticizers. For example, plasticizers can include phthalic acid esters such as dioctyl-4,5-epoxyhexahydrophthalate, tris-(octoxycarbonylethyl) isocyanurate, tristearin, epoxidized soybean oil or the like, or combinations including at least one of the foregoing plasticizers. Plasticizers are generally used in amounts of from about 0.5 to about 3.0 parts by weight, based on 100 parts by weight of the total composition, excluding any filler.

Ultraviolet (UV) absorbers can also be present in the disclosed thermoplastic composition. Exemplary ultraviolet absorbers can include for example, hydroxybenzophenones; hydroxybenzotriazoles; hydroxybenzotriazines; cyanoacrylates; oxanilides; benzoxazinones; 2- (2H-benzotriazol-2-yl)-4-(1,1,3,3-tetramethylbutyl)-phenol (CYASORB^{™} 5411); 2-hydroxy-4-n-octyloxybenzophenone (CYASORB^{™} 531); 2-[4,6-bis(2,4-dimethylphenyl)-1,3,5-triazin-2-yl]- 5-(octyloxy)-phenol (CYASORB^{™} 1164); 2,2'-(1,4- phenylene)bis(4H-3,1-benzoxazin-4-one) (CYASORB^{™} UV- 3638); 1,3-bis[(2-cyano-3,3-diphenylacryloyl)oxy]-2,2-bis[[(2-cyano-3, 3-diphenylacryloyl)oxy]methyl]propane (UVINUL^{™} 3030); 2,2'-(1,4-phenylene)bis(4H-3,1-benzoxazin-4-one); 1,3-bis[(2-cyano-3,3-diphenylacryloyl)oxy] -2,2-bis[[(2-cyano-3,3-diphenylacryloyl)oxy]methyl]propane; nano-size inorganic materials such as titanium oxide, cerium oxide, and zinc oxide, all with particle size less than 100 nanometers; or the like, or combinations including at least one of the foregoing UV absorbers. UV absorbers are generally used in amounts of from 0.01 to 3.0 parts by weight, based on 100 parts by weight of the total composition, excluding any filler.

The thermoplastic composition can further comprise a lubricant. As an example, lubricants can include for example, fatty acid esters such as alkyl stearyl esters, e.g., methyl stearate or the like; mixtures of methyl stearate and hydrophilic and hydrophobic surfactants including polyethylene glycol polymers, polypropylene glycol polymers, and copolymers thereof e.g., methyl stearate and polyethylene-polypropylene glycol copolymers in a suitable solvent; or combinations including at least one of the foregoing lubricants. Lubricants can generally be used in amounts of from about 0.1 to about 5 parts by weight, based on 100 parts by weight of the total composition, excluding any filler.

Anti-drip agents can also be used in the composition, for example a fibril forming or non-fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. In one example, TSAN can comprise 50 wt. % PTFE and 50 wt. % SAN, based on the total weight of the encapsulated fluoropolymer. The SAN can comprise, for example, 75 wt. % styrene and 25 wt. % acrylonitrile based on the total weight of the copolymer. An antidrip agent, such as TSAN, can be used in amounts of 0.1 to 10 parts by weight, based on 100 parts by weight of the total composition, excluding any filler.

### Properties and Articles

In various aspects, the present disclosure relates to articles comprising the compositions herein. The compositions can be molded into useful shaped articles by a variety of means such as injection molding, extrusion, rotational molding, blow molding and thermoforming to form articles. The disclosed compositions may optimize mechanical properties of high Dk compounds thereby enhancing the reliability and mitigate the risk during parts assembly process. Molded plaques comprising the disclosed composition may exhibit a dielectric constant greater than 4, or from about 4 to about 22, and may exhibit a dissipation factor less than 0.0005 observed at 1.9 GHz when tested using a split post dielectric resonator (SPDR) and network analyzer. The molded plaque may have a thickness of from 1 millimeter (mm) to about 5 mm. In various examples, the molded plaque may have a thickness of 0.125 inches (3.175 mm).

The compositions can be useful in the manufacture of articles requiring materials with good flow, high heat resistance, good dimensional stability and dielectric properties. In various aspects, the present disclosure provides materials useful for the manufacture of antenna for automotive and aviation fields as well as for phase shift, dielectric RF filter in base station, and other targets in wireless communication fields. The disclosed compositions may thus be useful for ceramic replacement in certain wireless communication applications such as GNSS (Global navigation satellite system) or GPS (Global Positioning System) antenna of automobile and aviation, phase shift, dielectric radio frequency filter in base station, and other targets in wireless communication fields. Further aspects of the present disclosure include components of an antenna, which may be molded from a material comprising a polymer and a ceramic titanate filler, with the molded part having certain design, average thickness, and dielectric constant.

In various aspects, the present disclosure relates to articles comprising the compositions herein. The compositions can be molded into useful shaped articles by a variety of means such as injection molding, extrusion, rotational molding, blow molding and thermoforming to form articles. The compositions can be useful in the manufacture of articles requiring materials with good flow, good impact strength, and good dielectric performance. In various aspects, the compositions may be useful for as well as electrically conducting purposes.

The advantageous characteristics of the compositions disclosed herein can make them appropriate for an array of uses.

### Methods for Making the Composition

Aspects of the disclosure further relate to methods for making a composition including a thermoplastic polymer component. In many aspects, the compositions can be prepared according to a variety of methods. The compositions of the present disclosure can be blended, compounded, or otherwise combined with the aforementioned ingredients by a variety of methods involving intimate admixing of the materials with any additional additives desired in the formulation. Because of the availability of melt blending equipment in commercial polymer processing facilities, melt processing methods can be used. In various further aspects, the equipment used in such melt processing methods can include, but is not limited to, co-rotating and counter-rotating extruders, single screw extruders, co-kneaders, disc-pack processors and various other types of extrusion equipment. In a further aspect, the extruder is a twin-screw extruder. In various further aspects, the composition can be processed in an extruder at temperatures from about 180 °C to about 350 °C, particularly 250 °C to 300 °C.

Methods may further comprise processing the composition to provide a plaque of a desired thickness. Plaques can be extruded, injection molded, compression molded or injection-compression molded, and may have a thickness between about 0.5 mm and 6 mm. Other processes could also be applied to the thin thermoplastic film, including but not limited to, lamination, co-extrusion, thermo-forming or hot pressing. In such aspects, further layers of other materials (for example, other thermoplastic polymer layers, metallic layers, etc.) could be combined with the composition.

Various combinations of elements of this disclosure are encompassed by this disclosure, e.g., combinations of elements from dependent claims that depend upon the same independent claim.

### Definitions

It is also to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a thermoplastic polymer component" includes mixtures of two or more thermoplastic polymer components. As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optional additional processes" means that the additional processes can or cannot be included and that the description includes methods that both include and that do not include the additional processes.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation is 100.

Unless otherwise stated to the contrary herein, all test standards are the most recent standard in effect at the time of filing this application. Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Aspects of the Disclosure

The present disclosure pertains to and includes at least the following aspects.
Aspect 1. A composition comprising: from about 15 wt. % to about 80 wt. % of a thermoplastic resin, wherein the thermoplastic resin comprises a polyphenylene sulfide, a polyether ketone, a polyphenylene oxide or a combination thereof; and from about 10 wt. % to 80 wt. % of a ceramic filler, wherein the ceramic filler comprises TiO₂, BaTiO₃, BaTi₄O₉, BaTi₉O₂₀, CaTiO₃, MgTiO₃, magnesium calcium titanate (MgₓCa₁₋ₓTiO₃), copper calcium titanate (CaCu₃Ti₄O₁₂) or SrTiO₃ or a combination thereof, wherein the ceramic filler has a particle size of from about 0.1 µm to about 10 µm, wherein the composition exhibits a dielectric constant greater than 4, wherein the composition exhibits a dissipation factor less than 0.005 at 1.9 GHz, and wherein the combined weight percent value of all components does not exceed 100 wt. %, and all weight percent values are based on the total weight of the composition.
Aspect 2. The composition according to any one of aspects 1-2, wherein the ceramic filler comprises CaTiO₃.
Aspect 3 The composition according to any one of aspects 1-2, wherein the ceramic filler comprises MgTiO₃.
Aspect 4 The composition according to any one of aspects 1-2, wherein the ceramic filler comprises TiO₂, BaTiO₃, BaTi₄O₉, BaTi₉O₂₀, CaTiO₃, MgTiO₃, magnesium calcium titanate (MgₓCa₁₋ₓTiO₃), copper calcium titanate (CaCu₃Ti₄O₁₂), or SrTiO₃ or a combination thereof and wherein the thermoplastic resin is a polyetherketone.
Aspect 5 The composition according to any one of aspects 1-2, wherein the ceramic filler comprises calcium titanate, magnesium titanate, magnesium calcium titanate, copper calcium titanate and wherein the thermoplastic resin is a polyphenylene sulfide.
Aspect 6 The composition according to any one of aspects 1-2, wherein the ceramic filler comprises calcium titanate, strontium titanate, magnesium titanate, magnesium calcium titanate, copper calcium titanate, and any mixtures and wherein the thermoplastic resin is a polyphenylene ether.
Aspect 7 The composition according to any one of aspects 1-3, wherein the ceramic filler has a particle size of from about 3 µm to about 10 µm.
Aspect 8 The composition according to any one of aspects 1-5, wherein the composition further comprises an impact modifier.
Aspect 9 The composition according to any one of aspects 1-6, wherein the composition comprises an impact modifier in an amount of from about 0.01 wt. % to about 10 wt. %.
Aspect 10. The composition according to any one of aspects 1-6, wherein the composition comprises an impact modifier present in an amount of from about 0.01 wt. % to about 8 wt. %, wherein the impact modifier comprises an epoxy functional block copolymer.
Aspect 11. The composition according to any one of aspects 1-8, wherein the composition further comprises an impact modifier comprising EGMA, E (ethylene)-Alkyl Acrylate-GMA (glycidyl methacrylate) terpolymers, E (ethylene)-Vinyl acetate (VA)-GMA (glycidyl methacrylate) terpolymers.
Aspect 12. The composition according to any one of aspects 1-9, wherein the composition further comprises a filler.
Aspect 13. The composition according to aspect 10, wherein the filler comprises glass fiber, glass flake, glass beads, talc, clay, mica, wollastonite, boron nitride, silica, or a mixture thereof.
Aspect 14. The composition according to any one of aspects 1-11, wherein the composition exhibits a high heat resistance characterized by a heat deflection temperature of at least 135 °C at 0.45 MPa when tested in accordance with ASTM D648.
Aspect 15. The composition according to any one of aspects 1-14, wherein the composition comprises 10 wt% - 70 wt% of poly(p-phenylene oxide) PPO resin, 5 wt% to 20 wt% of a general purpose polystyrene GPPS, 0.01 wt% to 30 wt% of an impact modifier, 5 wt% to 75 wt% of a ceramic fillers having a dielectric constant greater than or equal to 10 at 1 GHz, and 0 wt% to 50 wt% of glass fibers.
Aspect 16. The composition according to any one of aspects 1-14, wherein the composition comprises 20 wt% to 80 wt% of polyether ether ketone (PEEK) resin, 5 wt% to 80 wt% of ceramic fillers having a dielectric constant greater than or equal to 10 at 1 GHz, and 0 wt% to 50 wt% of glass fibers.
Aspect 17. The composition according to any one of claims 1-14, wherein the composition comprises 20 wt% to 80 wt% of polyphenylene sulfide (PPS) resin, and 5 wt% to 80 wt% of ceramic fillers having a dielectric constant greater than or equal to 10 at 1 GHz, 0 wt% to 50 wt% of glass fibers, and 0 wt% to 5 wt% of an impact modifier.
Aspect 18. An antenna comprising a composition, the composition comprising: from about 15 wt. % to about 80 wt. % of a thermoplastic resin, wherein the thermoplastic resin comprises a polyphenylene sulfide, a polyether ketone, or a combination thereof; and from about 10 wt. % to 80 wt. % of a ceramic filler, wherein the ceramic filler comprises TiO₂, BaTiO₃, BaTi₄O₉, BaTi₉O₂₀, CaTiO₃, MgTiO₃, magnesium calcium titanate (MgₓCa₁₋ₓTiO₃), copper calcium titanate (CaCu₃Ti₄O₁₂), or SrTiO₃ or a combination thereof, wherein the ceramic filler has a particle size of from about 0.1 µm to about 10 µm, wherein the composition exhibits a dielectric constant greater than 4, wherein the combined weight percent value of all components does not exceed 100 wt. %, and all weight percent values are based on the total weight of the composition.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of mixing conditions, e.g., component concentrations, extruder design, feed rates, screw speeds, temperatures, pressures and other mixing ranges and conditions that can be used to optimize the product purity and yield obtained from the described process. Only reasonable and routine experimentation will be required to optimize such process conditions.

### General Materials and Methods

Materials are presented in Table 1. The components and additives presented in Table 1 were used to prepare compositions according to aspects of the present disclosure and examples to be used for comparison to molded articles according to aspects of the disclosure.

**Table 1. Experimental Raw Material List**

| **Description** | **Supplier** | **Trade name** |
|---|---|---|
| PEEK | ZhongYan | 330G |
| PPS | NHU | NHU-3418 |
| PPS | NHU | NHU-3450 |
| PPS | NHU | NHU-3470 |
| TiO₂ (small size) | Chemours | R-350 |
| TiO₂ (large size) | Noble Electronics | T-RS-3-XF |
| CaTiO₃ (3.0 µm) | Noble Electronics | CT-3003 |
| CaTiO₃ (0.5 µm) | Noble Electronics | CT-30005 |
| SrTiO₃ (3.0 µm) | Noble Electronics | ST-3003 |
| SrTiO₃ (0.5 µm) | Noble Electronics | ST-30005 |
| BaTiO₃ (3.0 µm) | Noble Electronics | BT-3003 |
| MgTiO₃ (3.0 µm) | Shanghai Dianyan | MT501 |
| MgₓCa₁₋ₓTiO₃ (3.0 µm) | Shanghai Dianyan | CM501 |
| Anti-oxidant | DOVERPHOS | S-9228 |
| Anti-oxidant | BASF | Irganox^{™} 1010 |
| Mold Release | FACI | Glycolube^{™} P (ETS) |
| Silane | Momentive | Silquest A189 |
| Glass fiber | Nittobo | CSG 3PA-830 |

Formulations were prepared by extruding the pre-blended components using a twin extruder, Toshiba TEM-37BS. Base resin and additives were pre-blended and fed from main throat, ceramic fillers (TiO₂, BaTiO₃, SrTiO₃, MgTiO₃ MgₓCa₁₋ₓTiO₃, and CaTiO₃) were fed from port 7 in downstream. The extrusion process was run with a screw rotation speed at 300 revolutions per minute (RPM) and output of 30 kg/h, normally torque will be around 50-65%, and the extruded strand was cooled through water bath prior to pelletizing. The compounding temperature profiles are shown in Table 2 and the molding condition are shown in Table 3 below.

**Table 2. Compounding temperature profiles for ceramic filled PPS and PEEK**

| | | **PPS** | **PEEK** |
|---|---|---|---|
| Parameters | Unit | Screw L-1-1 | Screw L-1-1 |
| Compounder Type | \ | TEM-37BS | TEM-37BS |
| Barrel Size | mm | 1500 | 1500 |
| Die | mm | 3 | 3 |
| Feed (Zone 1) Temp | \ | | |
| Zone 1 Temp | °C | 50 | 50 |
| Zone 2 Temp | °C | 220 | 240 |
| Zone 3 Temp | °C | 270 | 350 |
| Zone 4 Temp | °C | 310 | 400 |
| Zone 5 Temp | °C | 310 | 400 |
| Zone 6 Temp | °C | 310 | 400 |
| Zone 7 Temp | °C | 310 | 400 |
| Zone 8 Temp | °C | 310 | 400 |
| Zone 9 Temp | °C | 310 | 400 |
| Zone 10 Temp | °C | 310 | 400 |
| Zone 11 Temp | °C | 310 | 400 |
| Die Temp | °C | 310 | 400 |
| Screw speed | rpm | 300 | 300 |
| Throughput | Kg/hr | 30 | 30 |

Pellets obtained from extrusion were then injection molded. The injection molding profile is presented in **Table 3.**

**Table 3. Injection molding conditions for ceramic filled PPS and PEEK**

| Molding parameters | Unit | PPS | PEEK |
|---|---|---|---|
| Pre-drying time | Hour | 4 | 4 |
| Pre-drying temp | °C | 120 | 150 |
| Hopper temp | °C | 50 | 50 |
| Zone 1 temp | °C | 290 | 390 |
| Zone 2 temp | °C | 320 | 400 |
| Zone 3 temp | °C | 320 | 400 |
| Nozzle temp | °C | 320 | 400 |
| Mold temp | °C | 140 | 180 |
| Screw speed | rpm | 100 | 100 |
| Back pressure | kgf/cm² | 30 | 30 |
| Cooling time | s | 40 | 40 |
| Shot volume | mm | 45 | 40 |
| Injection speed | mm/s | 50 | 60 |
| Holding pressure | kgf/cm² | 600 | 800 |
| Max. injection pressure | kgf/cm² | 1200 | 1200 |

Molded samples were tested in accordance with the standards described herein. Melt volume rates (MVR) were measured using ASTM D1238 at 316 °C/5 kg for PPS based samples and 400 °C/5 kg for PEEK based samples. Tensile properties were measured according to ASTM D638 method at a speed of 5 mm/min. Flexural properties were measured according to ASTM D790 method at a speed of 1.27 mm/min. Izod impact tests were performed according to ASTM D256 (notched) and ASTM D4812 (unnotched) under room temperature, with pendulum energy of 5 lbf/ft. Heat deflection temperatures were determined using method ASTM D648, under 0.45 MPa stress with the part thickness of 3.2 mm. Dielectric constant (Dk) and dissipation factor (Df) at fixed frequencies were tested according to SPDR method.

Dielectric constant (DK) and dissipation factor (DF) at fixed frequencies were tested on molded samples using a split post dielectric resonator (SPDR) and network analyzer. For 1.9 GHz measurement, the minimum sample size was 100 mm by 70 mm and the maximum sample thickness was 4 mm.

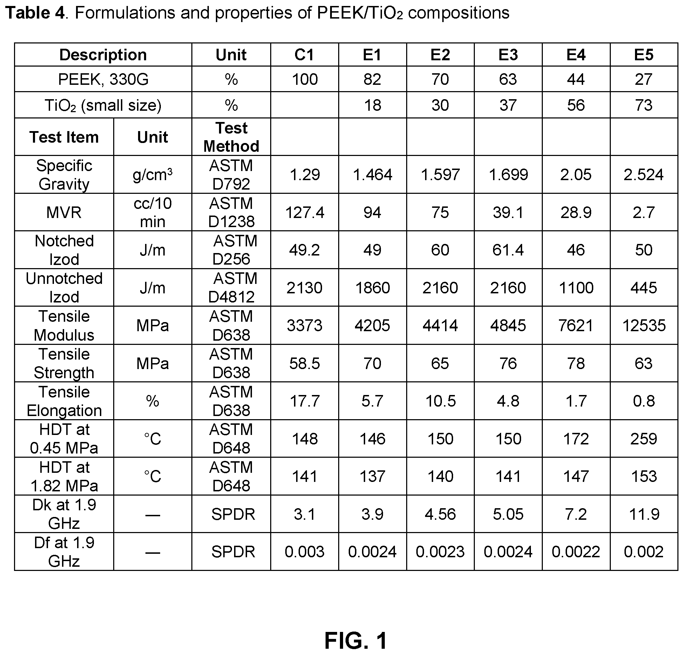

PEEK based formulations are presented in Table. 4 (shown in FIG. 1).

Table 4 shows the results of PEEK/TiO₂ composition. The TiO₂ used had a particle size distribution from 20 nm to 500 nm, and the properties of PEEK 330G neat resin were listed as the control sample (C1) for comparison. PEEK 330G is a high flow PEEK resin having good flowability, high modulus above 3000 MPa, and tensile elongation of 17.7%. At 1.9 GHz frequency, the PEEK neat resin (C1) exhibited a Dk of 3.1 and Df of 0.003. With an incremental loading of TiO₂ from 18% (E1) to 73% (E5) weight percent, the Dk value sharply increased from 3.9 to 11.9 according to a nonlinear relationship, while the Df value gradually decreased from 0.003 to 0.002 as a result of neutralization effect. As expected, the flowability significantly dropped in terms of melt volume rate (MVR), and the specific gravity increased up to 2.52 for E5. This value was almost double that of neat PEEK resin C1. With respect to the mechanical performance of PEEK/TiO₂ compositions in Table 4, the addition of TiO₂ largely increased the modulus and HDT of materials, and lowered the tensile elongation greatly from 17.7% to only 0.8%, which is also in line with our expectation. However, surprisingly the notched impact strength showed an increased tendency at first from 49 J/m for E1 to 61.4 J/m for E4 when the loading of TiO₂ is 56%, and then decreased to 50 J/m for E5 with extremely high TiO₂ loading. It appeared that the influence of ceramic filler on the impact properties of PEEK was less disadvantageous than mineral fillers (such as mica, talc, clay, etc.). However based on the data in Table 4, the exact inflection point of TiO₂ concentration was not readily apparent.

### Example II. PEEK and Varying Ceramic Titanates

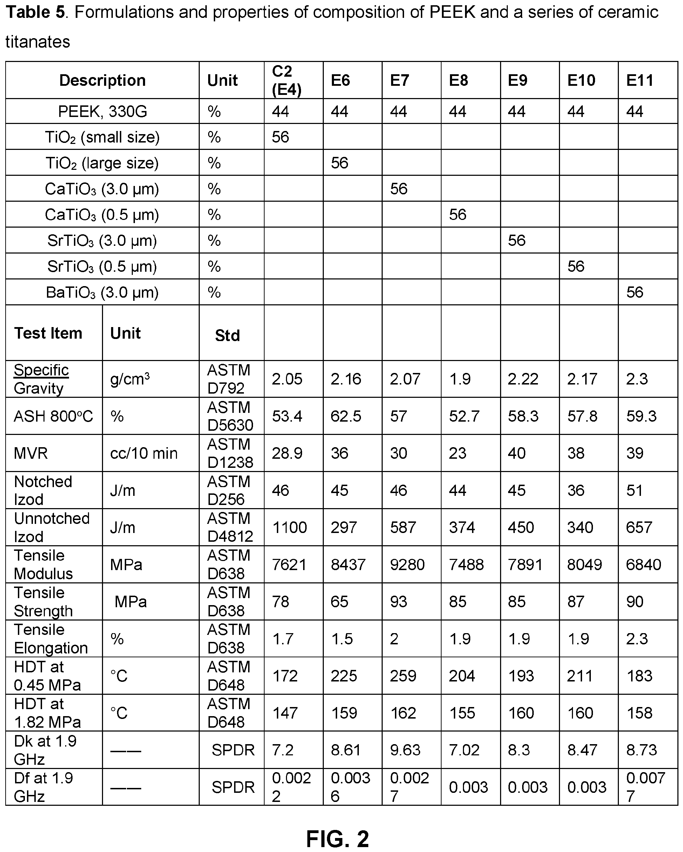

Formulations and properties of composition of PEEK and a series of ceramic titanates are shown in Table 5 (shown in FIG. 2).

The testing results of composition based on PEEK with other ceramic titanates are shown in Table 5. Sample E4 was used as a control sample (C2) here for the comparison with other ceramic fillers with a same loading of 56%. To demonstrate the effect of particle size on the dielectric and mechanical properties, larger TiO₂ with a particle size distribution from 3 µm to 50 µm was used in E6. The specific gravity, HDT, and Dk were found to be higher than those of C2 (E4 in Example I), this was mainly caused by the higher actual ash content of TiO₂ in E6. Furthermore, the composition with CaTiO₃ (E7, E8), SrTiO₃ (E9, E10), and BaTiO₃ (E11) of different particle size were prepared. At a similar ash content, E7 with a larger size CaTiO₃ (average particle size 3 µm) showed the highest Dk value of 9.6 at 1.9 GHz, indicating that CaTiO₃ may be the most efficient ceramic titanate in PEEK composition. In addition, no significant difference in modulus, strength, and HDT could be observed regarding the particle size. E11 PEEK/BaTiO₃ with an average particle size of 3 µm showed slightly better impact property than other ceramic titanates, however, the dissipation factor of PEEK/BaTiO₃ was measured to be as high as 0.0077, which will be an obstacle in some low signal loss scenario.

### Example III. PPS and Varying Ceramic Titanates

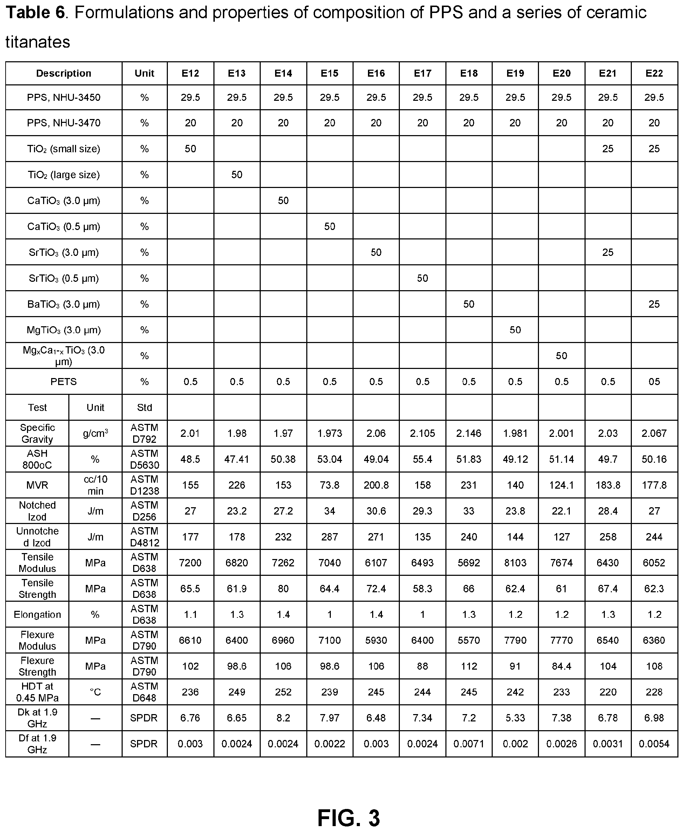

Likewise, the composition of PPS and a series of ceramic titanates were studied and compared. Table 6 (shown in FIG. 3) shows the formulation details and testing results of different sizes of TiO₂, CaTiO₃, SrTiO₃, BaTiO₃, as well as a mixture of them filled PPS with a total loading of 50%.

From E12 and E13 samples with small and large particle size of TiO₂, very similar dielectric and mechanical properties were found when the ash content is similar. E14 with a larger size CaTiO₃ exhibited the highest Dk at 1.9 GHz of all the composition, which is consistent with the observations of the PEEK compositions in Table 5. Even at a lower ash content, the Dk of E14 is still higher than E15 (8.2 VS 7.97) with a smaller particle size CaTiO₃, however, this phenomenon was not observed for SrTiO₃ in both PEEK and PPS compositions. Samples E19 filled with MgTiO₃ presented the lowest Dk (5.33) and Df (0.002) among all the ceramic fillers, while E20 filled with an alloy of MgO, CaO, TiO₂ (denoted as MgₓCa₁₋ₓTiO₃, where 0 < x < 1) showed a medium Dk value between E14 and E19. These ceramic filled PPS compounds were demonstrated to have relatively low dissipation factor except for BaTiO₃ (0.0071)

Moreover, samples with a larger particle size (E13, E14, E16) showed better flow and slightly higher tensile elongation compared to the smaller sized counterpart (namely, E12, E15, E17). Samples E14 and E16 also showed higher tensile and flexure strength in contrast to E15 and E17. This behavior demonstrated that the larger size of CaTiO₃ and SrTiO₃ may have contribute to improved mechanical performance in PPS composition. Samples E21 and E22 were prepared to assess any synergistic effect of ceramic titanate mixture. An amount of 25% SrTiO₃ (3.0 µm) and 25% TiO₂ (small size) were mixed in E19. The observed results of E21 were between those of E12 and E16 with pure TiO₂ (small size) and SrTiO₃ (3.0 µm). Similar results were observed for E22, implying no further increased Dk or mechanical properties can be achieved. However, this is still meaningful for the trade-off between materials cost and performance.

### Example IV. PPS/CaTiO₃ Formulations

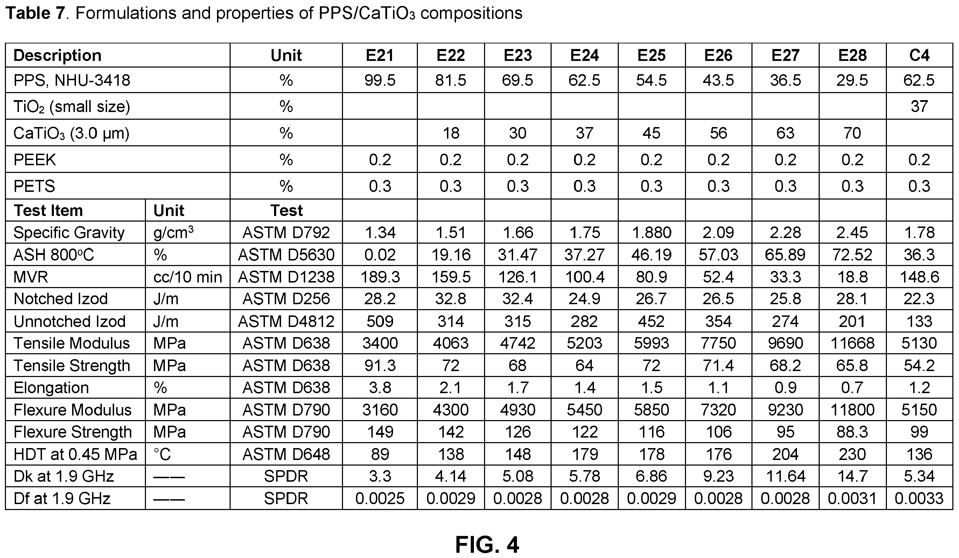

From above results, it was demonstrated that CaTiO₃ (3.0 µm) was the most efficient high Dk ceramic titanates in the disclosed composition, therefore, PPS compounds with various CaTiO₃ wt. % were prepared and the results are presented in Table 7 (shown in FIG. 4).

A similar trend with PEEK/TiO₂ composition (Table 4) can be seen from E23 to E30, that is, Dk drastically increased from 3.3 to 14.7 with an incremental CaTiO₃ weight percentage up to 70%. As for physical properties, modulus and HDT significantly increased with increasing CaTiO₃ loading as expected. However, the MVR, tensile and flexure strength appeared to decline. As a control sample, composition C3 with 37% TiO₂ was measured to have lower Dk, strength, and HDT in direct comparison with E26 when at the same ceramic filler loading, which further verified the superior mechanical and dielectric performance of CaTiO₃, particularly in high Dk low Df applications.

### Example V. PEEK/CaTiO₃ formulations.

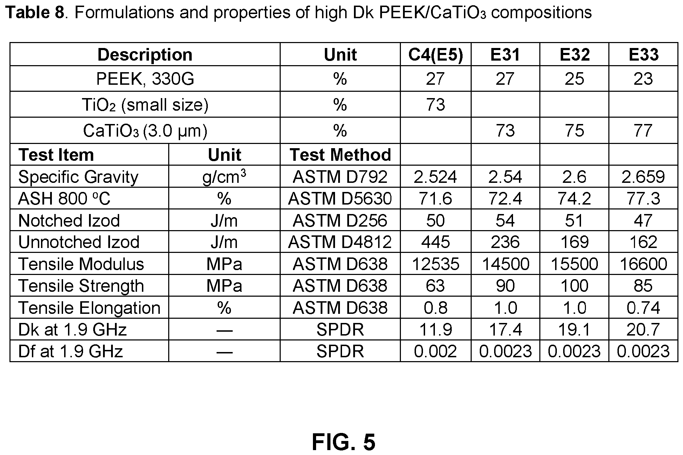

Samples were prepared to evaluate the combination of PEEK and CaTiO₃ systems and are presented in Table 8 (shown in FIG. 5).

Although E30 achieved a Dk as high as 14.7, such a high content of ceramic filler (70%) inevitably induced inferior ductility. Furthermore, the low melt strength of E30 prevented PPS composition from extrusion with more ceramic fillers to achieve an even higher Dk (above 15.0). To further evaluate the effect of Dk based on ceramic replacement, compounding and testing of PEEK composition with 73%, 75%, and 77% CaTiO₃ (3.0 µm) were carried out. With the same ceramic wt. %, E29 presented significantly higher Dk than control sample E5. As shown, the Dk of E32 and E33 could be raised to 19.1 and 20.7, while maintaining the Df value as low as 0.0023. In contrast to the PPS/CaTiO₃ composition, these super high Dk PEEK compounds also have a higher notched impact around 50 J/m, as well as higher strength above 85 MPa. With the features including high dielectric constant (Dk) and low dissipation factor (Df), high heat resistance, injection moldable, and good mechanical properties, PEEK/CaTiO₃ composition will be highly promising for the application in ceramic replacement such as GNSS antenna and dielectric RF filter in 5G base station.

### Example VI. Hi Dk PPS/ceramic compositions with glass fiber

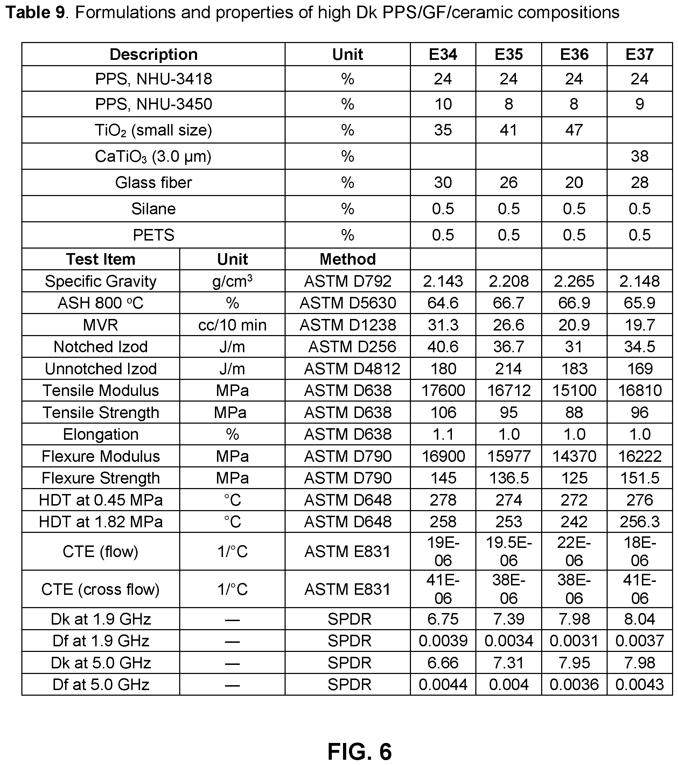

PPS/ceramic titanate compositions were further evaluated. For plastic auto Global Navigation Satellite Systems (GNNS) antenna applications, usually a high-low temperature test is performed to determine if any resonant frequency shift happens. Therefore, materials with good dimensional stability and an especially low coefficient of thermal expansion CTE over a wide range of temperature is crucial to minimize the frequency shift. Table 9 (shown in FIG. 6) presents formulations of high Dk PPS composition with ceramic and glass fiber, as well as their dielectric and thermal properties were presented. The glass fiber used here was a 13 µm flat glass fiber with a flat ratio (W/D) of 4:1.

The combination of glass fiber and ceramic titanates provided a high Dk value from 6.0 to 8.0, and low average CTE (from -40 °C to 90 °C) about 20/40 ppm in flow/x-flow direction. However, the CTE of E12 and E14 without any glass fiber were measured to be about 55 ppm in both directions. Furthermore, the modulus, strength and HDT were also notably improved due to the reinforcement of glass fiber.

### Example VII. Hi Dk PPO/ceramic compositions

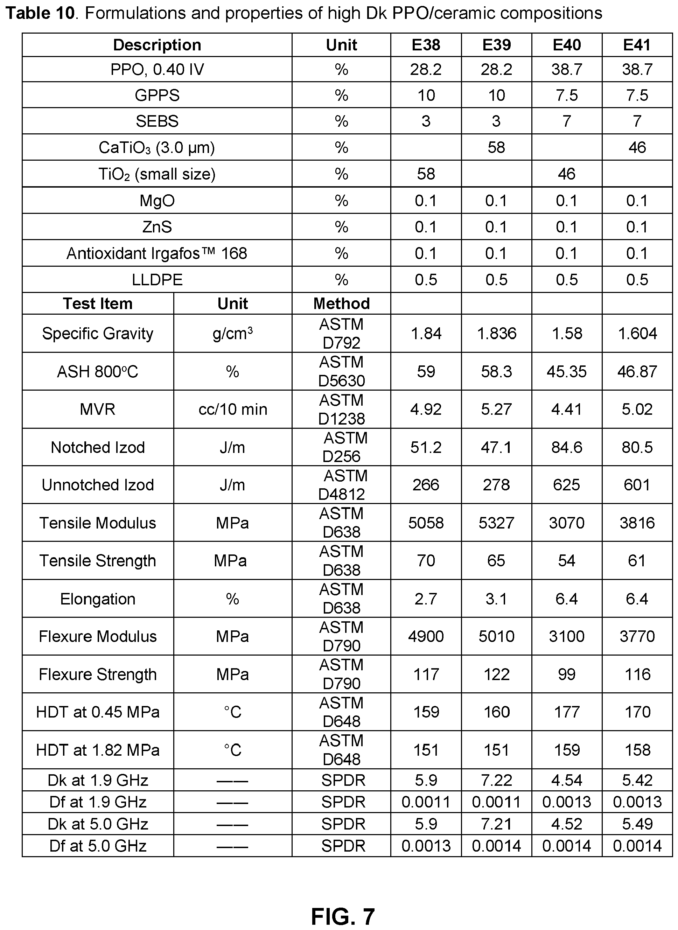

Formulations of poly(p-phenylene oxide) PPO, polystyrene GPPS, impact modifier SEBS, and a high loading of ceramic fillers were developed and compared as well as shown in Table 10 (shown in FIG. 7).

Table 10 presents the formulation and physical properties of the ceramic filler loading of 58% and 46% respectively. These formulations demonstrated the difference in dielectric properties when using traditional TiO₂ compared to the disclosed titanates that have not been conventionally employed in PPO compositions. When TiO₂ was replaced by CaTiO₃, the dielectric constant was expected to increase by around 20% at the same loading while the Df maintained extremely low level. Moreover, no significant change was observed between E38 and E39 (same for E40 and E41) in terms of physical and mechanical properties, and all four samples showed HDT at 0.45 MPa above 150 °C.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the disclosure should be determined with reference to the appended claims, along with the full scope of equivalents to which such claims are entitled.

It will be apparent to those skilled in the art that various modifications and variations can be made in the present disclosure without departing from the scope or spirit of the disclosure. Other embodiments of the disclosure will be apparent to those skilled in the art from consideration of the specification and practice of the disclosure disclosed herein. It is intended that the specification and examples be considered as exemplary only, with a true scope and spirit of the disclosure being indicated by the following claims.

The patentable scope of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A composition comprising:
from about 15 wt. % to about 80 wt. % of a thermoplastic resin, wherein the thermoplastic resin comprises a polyphenylene sulfide, a polyether ketone, a polyphenylene oxide or a combination thereof; and
from about 10 wt. % to 80 wt. % of a ceramic filler, wherein the ceramic filler comprises TiO₂, BaTiO₃, BaTi₄O₉, BaTi₉O₂₀, CaTiO₃, MgTiO₃, magnesium calcium titanate (MgₓCa₁₋ₓTiO₃), copper calcium titanate (CaCu₃Ti₄O₁₂) or SrTiO₃ or a combination thereof, wherein the ceramic filler has a particle size of from about 0.1 µm to about 10 µm,
wherein the composition exhibits a dielectric constant greater than 4,
wherein the composition exhibits a dissipation factor less than 0.005 at 1.9 GHz, and
wherein the combined weight percent value of all components does not exceed 100 wt. %, and all weight percent values are based on the total weight of the composition.

2. The composition according to any one of claims 1-2, wherein the ceramic filler comprises CaTiO₃.

3. The composition according to any one of claims 1-2, wherein the ceramic filler comprises MgTiO₃.

4. The composition according to any one of claims 1-2, wherein the ceramic filler comprises TiO₂, BaTiO₃, BaTi₄O₉, BaTi₉O₂₀, CaTiO₃, MgTiO₃, magnesium calcium titanate (MgₓCa₁₋ₓTiO₃), copper calcium titanate (CaCu₃Ti₄O₁₂), or SrTiO₃ or a combination thereof and wherein the thermoplastic resin is a polyetherketone.

5. The composition according to any one of claims 1-2, wherein the ceramic filler comprises calcium titanate, magnesium titanate, magnesium calcium titanate, copper calcium titanate and wherein the thermoplastic resin is a polyphenylene sulfide.

6. The composition according to any one of claims 1-2, wherein the ceramic filler comprises calcium titanate, strontium titanate, magnesium titanate, magnesium calcium titanate, copper calcium titanate, and any mixtures and wherein the thermoplastic resin is a polyphenylene ether.

7. The composition according to any one of claims 1-3, wherein the ceramic filler has a particle size of from about 3 µm to about 10 µm.

8. The composition according to any one of claims 1-5, wherein the composition further comprises an impact modifier.

9. The composition according to any one of claims 1-6, wherein the composition comprises an impact modifier in an amount of from about 0.01 wt. % to about 10 wt. %.

10. The composition according to any one of claims 1-6, wherein the composition comprises an impact modifier present in an amount of from about 0.01 wt. % to about 8 wt. %, wherein the impact modifier comprises an epoxy functional block copolymer.

11. The composition according to any one of claims 1-8, wherein the composition further comprises an impact modifier comprising EGMA, E (ethylene)-Alkyl Acrylate-GMA (glycidyl methacrylate) terpolymers, E (ethylene)-Vinyl acetate (VA)-GMA (glycidyl methacrylate) terpolymers.

12. The composition according to any one of claims 1-9, wherein the composition further comprises a filler.

13. The composition according to claim 10, wherein the filler comprises glass fiber, glass flake, glass beads, talc, clay, mica, wollastonite, boron nitride, silica, or a mixture thereof.

14. The composition according to any one of claims 1-11, wherein the composition exhibits a high heat resistance **characterized by** a heat deflection temperature of at least 135 °C at 0.45 MPa when tested in accordance with ASTM D648.

15. An antenna comprising a composition, the composition comprising:
from about 15 wt. % to about 80 wt. % of a thermoplastic resin, wherein the thermoplastic resin comprises a polyphenylene sulfide, a polyether ketone, or a combination thereof; and
from about 10 wt. % to 80 wt. % of a ceramic filler, wherein the ceramic filler comprises TiO₂, BaTiO₃, BaTi₄O₉, BaTi₉O₂₀, CaTiO₃, MgTiO₃, magnesium calcium titanate (MgₓCa₁₋ₓTiO₃), copper calcium titanate (CaCu₃Ti₄O₁₂), or SrTiO₃ or a combination thereof, wherein the ceramic filler has a particle size of from about 0.1 µm to about 10 µm,
wherein the composition exhibits a dielectric constant greater than 4, wherein the combined weight percent value of all components does not exceed 100 wt. %, and all weight percent values are based on the total weight of the composition.
